Europäisches Patentamt

European Patent Office

Office européen des brevets

(11) Publication number: **0 193 524**
**B1**

(12) EUROPEAN PATENT SPECIFICATION

(45) Date of publication of patent specification: **08.08.90**

(21) Application number: **84903106.7**

(22) Date of filing: **27.08.84**

(86) International application number:
**PCT/SE84/00284**

(87) International publication number:
**WO 85/01093 14.03.85 Gazette 85/07**

(51) Int. Cl.⁵: **F 16 L 9/06**

(54) **PIPE.**

(30) Priority: **02.09.83 SE 8304740**

(43) Date of publication of application:
**10.09.86 Bulletin 86/37**

(45) Publication of the grant of the patent:
**08.08.90 Bulletin 90/32**

(84) Designated Contracting States:
**AT BE CH DE FR GB LI NL SE**

(56) References cited:
**DE-A-1 282 439**
**DE-A-2 750 534**
**DE-C- 865 081**
**US-A-1 864 861**
**US-A-2 834 965**
**US-A-3 838 713**

(73) Proprietor: **GEBELIUS, Sven Runo Vilhelm**
**Box 15008**
**S-161 15 Bromma (SE)**

(72) Inventor: **GEBELIUS, Sven Runo Vilhelm**
**Box 15008**
**S-161 15 Bromma (SE)**

(74) Representative: **Norén, Per Bo Arne**
**SWEDPATENT AB P.O. Box 186**
**S-198 00 Balsta (SE)**

Courier Press, Leamington Spa, England.

# Description

The present invention relates to a pipe, which can be manufactured from a substantially non-flexible material, having properties with regard to manufacture, handling and use that are considerably improved in relation to previously known types of pipes.

Pipes manufactured from a substantially non-flexible material such as steel, stainless steel and also other metallic materials, are normally manufactured and supplied in lengths, suitable for storage, transport and handling when used. A general restriction in this respect is the length of the vehicles used for transport of the pipes. In use, considerably longer lengths of pipe are often required, and the pipes are therefore joined by means of welding, pipe couplings or similar, to required pipe length. For those applications in which the pipes should have a varied longitudinal direction of extension, special pipe bending tools are usually required. For applications, in which the pipes are located below the ground surface, there are also problems caused by settlements in the ground layers, based on changes in ground water level, temperature or other reasons. As a result, the pipes often burst, and, for example with regard to pipes carrying water or gas, result in considerable inconvenience. Such bursts can also occur due to changes in the length caused by temperature variations. Changes in the length extension have previously been compensated for by attachment of movement equalizing compensators at spaced locations along the total extension of a pipe line. However, DE-A-2 750 534 discloses a pipe having integrated and outwardly extending waveshaped or creased portions formed from the wall of a pipe, with intermediately located nondeformed smooth wall surfaces. The outwardly extending portions coincide with the pipe wall surface at one point, gradually extending outwardly in two opposed directions from said coinciding point.

The object of the present invention is to disclose a pipe, which can be manufactured and supplied in considerably longer lengths than previously practically possible, and thus eliminates, or considerably reduces, the number of joints along the total extension of a pipe line. It is further possible to store and transport extremely long lengths of pipe with a considerably reduced space requirement than what has previously been regarded as possible. A reduction in the number of joints also result in improved resistance against corrosion and bursts, and the resistance against burst caused by changes in length extension is also considerably improved, without attachment of compensators. Furthermore, the pipe according to the present invention offers the possibility of an improved flow characteristics in relation to previously used types of pipes, and other advantages are also disclosed in the following descriptive part of the specification with examples of embodiments.

The present invention relates to a metal pipe, comprising, as a continuous length of pipe, portions having a substantially smooth wall surface, separated from each other by means of intermediately located waveshaped or creased portions shaped from the pipe length and which only partly surround the circumference of the pipe, and it is mainly characterised in that said waveshaped or creased portions are arranged as a number of each other adjacently located hobbings or stampings having an external diameter substantially corresponding to the external diameter of intermediately located portions of the metal pipe, the hobbing or stamping depth being maintained substantially constant in the entire extension of surrounding waveshaped or creased portions in relation to intermediately located portions having a substantially smooth surface.

A number of embodiments of pipes, including certain embodiments intended to serve as examples of embodiments within the scope of the invention, are more fully described below with reference to the accompanying drawings, in which:-

Fig. 1 shows a sectional view of a pipe length;

Fig. 2 shows a longitudinal sectional view of a slightly modified pipe;

Fig. 3 shows a perspective view of a length of pipe modified according to the present invention;

Fig. 4 shows a longitudinal sectional view of the pipe shown in Fig. 3;

Fig. 5 shows by way of example how a pipe according to the present invention, when located on an irregular surface, adjusts to the extension of the surface; and

Fig. 6 shows a perspective view of a pipe length wound into a number of adjacently located windings.

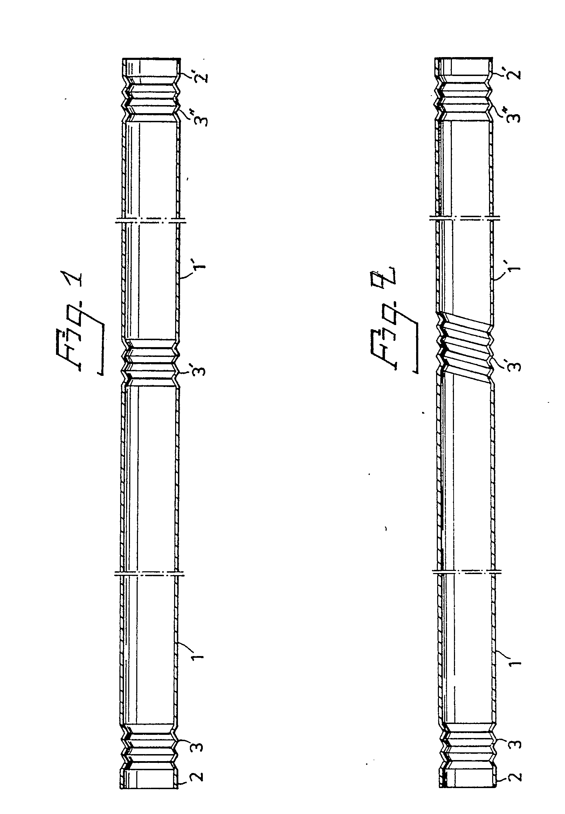

With reference to Fig. 1, said figures illustrate a pipe, comprising a number of successive and preferably cylindrical tubular portions 1, 1', separated from each other and from cylindrical end portions 2, 2' by means of bellow-shaped portions 3, 3', 3''. Said bellow-shaped portions 3, 3', 3'' comprise adjacently located and surrounding hobbings or stampings, forming a substantially waveshaped section partly surrounding the pipe. The pipe length shown in Fig. 1 may include any desired number of bellow-shaped portions 3, 3', 3'', separated from each other by means of intermediately located cylindrical portions 1, 1'. The bellow-shaped portions 3, 3', 3'', the length extension of which in relation to intermediately located cylindrical portions 1, 1' obviously can be different from what is shown, facilitate that the pipe length can be changed, both with regard to total length, as well as with regard to direction of extension.

The described pipe will thus permit two adjacently located cylindrical portions 1, 1' to be located in from each other different angular direction of extension, and the intermediately located bellow-shaped portion 3' takes up this change as compression of the portion receiving a smaller radius, and as expansion of the opposed side.

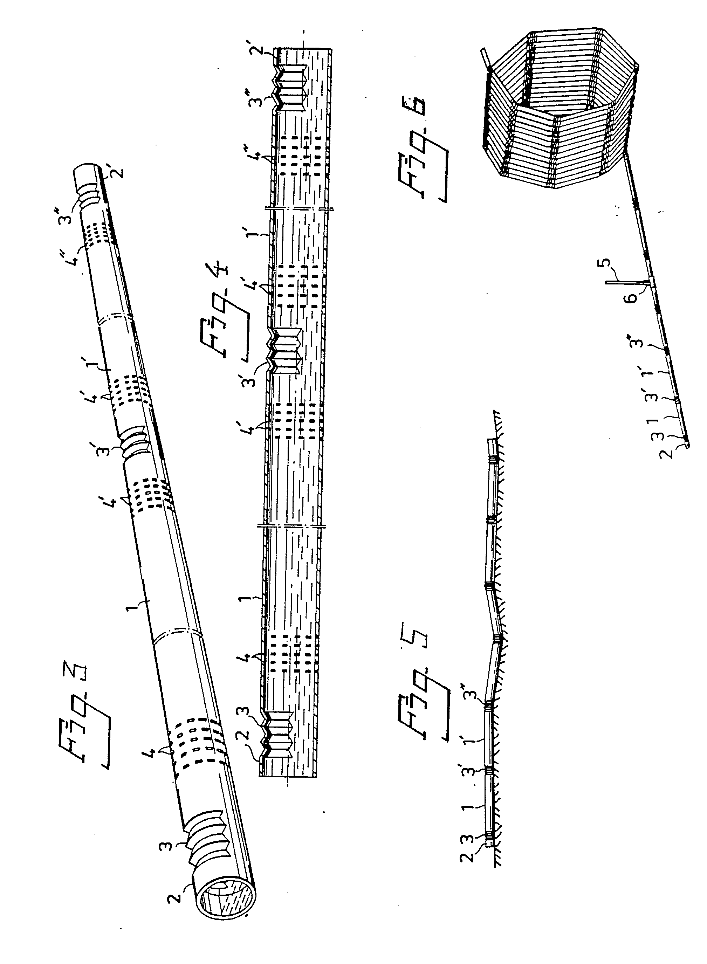

However, to arrange the bellow-shaped portions 3, 3', 3'' as a number of surrounding and adjacently located annular folds or waves results in a disadvantage, since turbulence can occur in the medium flowing through the pipe length when passing the bellow-shaped portions 3, 3', 3''. This problem can substantially be avoided by a modification with regard to the shape of the bellow-shaped portions 3, 3', 3'', and an example of such a modification is shown in Fig. 2. The centrally located bellow-shaped portion 3' has been modified into a surrounding fold or wave having a helical line of extension.

By selecting a suitable pitch for such a helical portion 3', based on the flow rate for the medium intended to flow through the pipe, a most desirable effect can be achieved, since the flowing medium thereby is guided into a rotary flow movement, which causes the medium to follow the complete internal surface of the pipe. As a result, existing contaminating substances that could cause corrosion are moved away, and when transporting a liquid medium, it is also avoided that existing air or gas within the pipe only contacts a restricted part of the pipe, usually the internal and upper surface, which for e.g. water pipes results in a risk for corrosion in the intermediate zone between air/water. When the pipe is used for transport of a gaseous medium, the previously mentioned rotary flow movement also causes condensed water or similar to be moved away with the gas stream. The pipe shown in Fig. 2 is arranged with both circularly and helically extending bellow-shaped portions 3, 3', 3'', but only one of these types, such as the helically extending portion 3', can obviously be used for a pipe length. Furthermore, each helically extending portion 3' may also be formed by means of a number of each other adjacently located helical folds or waves, having a substantially corresponding pitch, and individual entrances and exits.

It is possible to modify the above described pipes according to the present invention, and examples of such modifications are shown in Figs. 3 and 4. Said figures include a first alternative embodiment, according to which the previously mentioned bellow-shaped portions 3, 3', 3'' are arranged semi-surrounding the pipe, whereby said portions 3, 3', 3'' include a part having a smooth internal surface. The reason for this is to remove the problems previously discussed with reference to the embodiment of Fig. 2, i.e. that pipes used for transport of a liquid, e.g. water, often receive damage by corrosion in the intermediate zone between air/water with regard to the upper portion of a horizontally extending pipe, as well as that pipes used for transport of gas often receive liquid deposits by the lower and internal bottom portion of the pipe. In order to move e.g. a liquid deposit located at the lower internal portion of a pipe used for gas transport, said internal surface should preferably be completely smooth. The present invention caters for this desired feature by locating the smooth part of the bellow-shaped portion 3, 3', 3''

as lower portions when installing a pipe. With regard to pipes used for transport of liquid, said smooth part is advantageously located as an upper portion, in order to cause transport of existing air or gaseous medium together with the flowing liquid medium. There is thus no risk for formation of gas or air pockets at the internal upper portion.

The above disclosed semi-surrounding bellow-shaped portions 3, 3', 3'' are preferably arranged surrounding at least 50% of the total peripheral circumference of the pipe, in order to facilitate acceptance of changes in the length extension of the pipe. Furthermore, the semi-surrounding bellow-shaped portions 3, 3', 3'' may advantageously be arranged as two portions, internally separated by means of smooth parts. When installed, the separated bellow-shaped portions 3, 3', 3'' are advantageously located on the left respectively right hand side of the pipe, whereby both the bottom portion and the top portion of the pipe comprises of smooth surfaces, which separate the two parts of the bellow-shaped portions 3, 3', 3''.

The bellow-shaped portions 3, 3', 3'' may further be arranged either as ringshaped parts located adjacent to each other, or as helically extending members, basically comparable with the previous disclosure with reference to Fig. 2. In the latter case, there is a further advantage, since a medium flowing through the pipe receives a rotary flow, whereby the previously discussed advantageous flow characteristics is achieved in combination with the smooth parts, and hereby it is further avoided that nondesirable deposits of liquid or gas will remain within the pipe.

The fact that one or two portions of the peripheral part of the pipe are not arranged as a bellow-shaped portion 3, 3', 3'' results substantially only in advantages, since large flexibility is maintained, which, when installed below the ground surface, results in extremely good properties with regard to settlements in surrounding ground layers, which result in pipe bursts for a conventional pipe line. In all embodiments of the invention, this flexibility is of utmost importance, in combination with the fact that the pipe can be manufactured and supplied in substantially desired lengths, which results in the possibility to install long pipe lines without any joints.

Figs. 3 and 4 also show portions designated as 4, 4', 4''. These portions 4, 4', 4'' are intended to indicate that combinations with other types of shaped portions can be used.

Previously discussed helical shape can obviously also be used with regard to the modifications shown in Figs. 3 and 4, in order to guide the medium flowing through the pipe.

Fig. 5 shows by way of example how a pipe according to the present invention can be installed adjusted to the line of extension for the support, and this adjustment is carried out continuously to the supporting structure. As a result, extremely good adjustment is achieved with regard to settlements or slides in ground layer, and since no conventional pipe joints exist, extremely good safety against pipe bursts is achieved. This is a significant advantage within areas where earth quakes occur, and where settlements in the ground layers often result in interruptions within the distribution network for water, gas and similar.

A further and not unimportant advantage is illustrated in Fig. 6, which is intended to illustrate how a pipe can be wound with adjacently located windings, thus forming a unit which is easily stored, transported and handled. Furthermore, a connection 5 is shown extending from the pipe, established by means of a pipe coupling 6. Since the pipe according to the present invention comprises of a continuous length of pipe, formed by means of alternatively smooth and substantially cylindrical portions 1, 1' and deformable non-smooth portions 3, 3', 3'' respectively 4, 4', 4'', said first mentioned smooth portions 1, 1' can be utilized for establishing pipe connections with conventional prior art techniques, e.g. by means of a pipe coupling of the type disclosed in SE, A, 7317194-4, which facilitates establishment of connection against a pipe without dividing the pipe.

A further not unimportant aspect is also, that the present invention makes it possible to use pipes with considerably reduced wall thickness for a large number of applications. The wall thickness of a pipe is not decided purely on basis of the internal pressure imposed by a medium flowing through the pipe, but a factor deciding wall thickness is often also the method used for joining and connection. For many applications, the wall thickness of a pipe is chosen to facilitate establishment of a screw thread at the connection points, or to facilitate joining by means of welding. Since the pipe according to the present invention can be manufactured as a continuous pipe length without any pipe joints, and since it includes portions which facilitate connection of an embracing coupling housing forming a part of pipe couplings for establishment of connection against other pipes without cutting the original main pipe, previous considerations relating to methods of connection are eliminated when the wall thickness of a pipe is decided. If for example the pipe according to the present invention is manufactured from stainless steel, or any other corrosion resistant material, a pipe having smaller wall thickness than previously used types of pipes can be used for most applications. This advantage results in major profits, both with regard to weight as well as the cost for a pipe line. The shape deformable portions 3, 3', 3'', respectively 4, 4', 4'', in the pipe according to the present invention will, as previously discussed, take up changes in the length, changes in angular direction of extension, but also serve as strengthening sections in relation to radial forces applied against the pipe, which further strengthens same and facilitates a reduction of the wall thickness.

The deformable portions 3, 3', 3'' respectively 4, 4', 4'' can obviously also be further varied with regard to specific fields of use, as well as combined in a number of different ways. The advantages of the invention are obvious for all types of pipes manufactured from a substantially rigid and non-flexible material, such as metallic materials. An important characteristic feature of the present invention is, that the pipe comprises alternatively located sections of substantially smooth portions 1, 1' and portions 3, 3', 3'' respectively 4, 4', 4'' facilitating changes in length and/or direction of extension for the pipe.

A pipe length according to the present invention can also during manufacture be adapted to suit a specific application, i.e. after a predetermined distance be arranged to accept a large angular change in direction of extension during installation, as well as be arranged to accept changes in length at predetermined spaced locations. This means, that pipe lengths, adapted for specific applications, can be supplied.

## Claims

1. A metal pipe, comprising, as a continuous length of pipe, portions having a substantially smooth wall surface (1, 1', 2, 2'), separated from each other by means of intermediately located waveshaped or creased portions (3, 3', 3''; 4, 4', 4'') shaped from the pipe length and which only partly surround the circumference of the pipe, characterised in that said waveshaped or creased portions (3, 3', 3''; 4, 4', 4'') are arranged as a number of each other adjacently located hobbings or stampings having an external diameter substantially corresponding to the external diameter of intermediately located portions (1, 1', 2, 2') of the metal pipe, the hobbing or stamping depth being maintained substantially constant in the entire extension of surrounding waveshaped or creased portions in relation to intermediately located portions (1, 1', 2, 2') having a substantially smooth surface.

2. A metal pipe according to claim 1, characterised in that the intermediately located and the pipe length partly surrounding waveshaped or creased portions (3, 3', 3''; 4, 4', 4'') are arranged separated into two parts by means of two intermediately located and in longitudinal direction of the pipe length extending substantially smooth surfaces, preferably arranged located in an opposed relationship to each other.

3. A metal pipe according to claim 1, characterised in that the intermediately located and the pipe length partly surrounding waveshaped or creased portions (3, 3', 3''; 4, 4', 4'') are arranged separated into at least three parts by means of intermediately located and in longitudinal direction of the pipe length extending substantially smooth surfaces.

4. A metal pipe according to any one of claims 1—3, characterised in that the intermediately located and the pipe length partly surrounding waveshaped or creased portions (3, 3', 3''; 4, 4', 4'') are arranged having adjacently located waves or creases with individually different annular extension.

5. A metal pipe according to any one of claims 1—3, characterised in that the intermediately located and the pipe length partly surrounding waveshaped or creased portions (3, 3', 3''; 4, 4', 4'') are arranged having adjacently located waves or creases extending helically.

6. A metal pipe according to any one of claims 1—3, characterised in that the intermediately located and the pipe length partly surrounding waveshaped or creased portions (3, 3', 3''; 4, 4', 4'') are arranged as at least two waveshaped or creased portions, partly surrounding the pipe length, having adjacently located waves or creases extending helically with a substantially equal pitch.

7. A metal pipe according to any one of claims 1—6, characterised in that the intermediately located and the pipe length partly surrounding waveshaped or creased portions (3, 3', 3''; 4, 4', 4'') comprises of from each other separated embossments, located angularly rotated or displaced in relation to each other with regard to adjacently located turns.

8. A metal pipe according to any one of claims 1—7, characterised in that a pipe length includes a number of substantially equally spaced intermediately located and the pipe length partly surrounding waveshaped or creased portions (3, 3', 3''; 4, 4', 4''), and that said portions (3, 3', 3''; 4, 4', 4'') are arranged similar, or nonsimilar, in relation to each other.

9. A metal pipe according to any one of claims 1—7, characterised in that a pipe length includes a number of nonequally spaced intermediately located and the pipe length partly surrounding waveshaped or creased portions (3, 3', 3''; 4, 4', 4''), and that said portions (3, 3', 3''; 4, 4', 4'') are arranged similar, or nonsimilar, in relation to each other.

10. A metal pipe according to any one of claims 1—9, characterised in that the pipe is arranged bent in the region of the intermediately located and the pipe partly surrounding waveshaped or creased portions (3, 3', 3''; 4, 4', 4'') into a substantially circular configuration having adjacently located winding turns.

**Patentansprüche**

1. Eine Metallröhre mit Abschnitten als ununterbrochener Längenbereich der Röhre, die eine im wesentlichen glatte Wandoberfläche (1, 1', 2, 2') haben, die voneinander mittels dazwischen angeordneten wellenförmigen oder faltigen Abschnitten (3, 3', 3''; 4, 4', 4'') getrennt sind, welche aus dem Röhrenlängenbereich gebildet sind und welche lediglich teilweise den Umfang der Röhre umgeben, dadurch gekennzeichnet, daß die wellenförmigen oder faltigen Abschnitte (3, 3', 3''; 4, 4', 4'') als eine Anzahl von zueinander benachbart angeordneten Prägungen oder Preßstücken ausgebildet sind, deren Außendurchmesser im wesentlichen dem Außendurchmesser der dazwischen angeordneten Abschnitte (1, 1', 2, 2') der Metallröhre entspricht, wobei die Prägetiefe oder Preßstücktiefe im wesentlichen konstant über die Gesamterstreckung der umgebenden wellenförmigen oder faltigen Abschnitte gehalten wird bezogen auf die dazwischen angeordneten Abschnitte (1, 1', 2, 2') mit einer im wesentlichen glatten Oberfläche.

2. Eine Metallröhre nach Anspruch 1, dadurch gekennzeichnet, daß die dazwischen angeordneten und den Röhrenlängenbereich teilweise umgebenden wellenförmigen oder faltigen Abschnitte (3, 3', 3''; 4, 4', 4'') in zwei Teile getrennt angeordnet sind mittels zweier dazwischen angeordneter und sich in der Längsrichtung des Röhrenlängenbereiches erstreckender, im wesentlichen glatter Oberflächen, die vorzugsweise in einer entgegengesetzten Beziehung zueinander angeordnet sind.

3. Eine Metallröhre nach Anspruch 1, dadurch gekennzeichnet, daß die dazwischen angeordnete und den Röhrenlängenbereich teilweise umgebenden wellenförmigen oder faltigen Abschnitte (3, 3', 3''; 4, 4', 4'') in wenigstens drei Teile unterteilt sindmittels dazwischen angeordneter und sich in Längsrichtung des Röhrenlängenbereiches erstreckender glatter Oberflächen.

4. Eine Metallröhre nach einem der Ansprüche 1 bis 3, dadurch gekennzeichnet, daß die dazwischen angeordneten und den Röhrenlängenbereich teilweise umgebenden wellenförmigen oder faltigen Abschnitte (3, 3', 3''; 4, 4', 4'') mit benachbart angeordneten Wellen oder Falten bei individuell unterschiedlicher Ringerstreckung angeordnet sind.

5. Eine Metallröhre nach einem der Ansprüche 1 bis 3, dadurch gekennzeichnet, daß die dazwischen angeordneten und den Röhrenlängenbereich teilweise umgebenden wellenförmigen oder faltigen Abschnitte (3, 3', 3''; 4, 4', 4'') mit benachbart angeordneten Wellen oder Falten, welche sich spiralförmig erstrecken, angeordnet sind.

6. Eine Metallröhre nach einem der Ansprüche 1 bis 3, dadurch gekennzeichnet, daß die dazwischen angeordneten und den Röhrenlängenbereich teilweise umgebenden wellenförmigen oder faltigen Abschnitte (3, 3', 3''; 4, 4', 4'') als wenigstens zwei wellenförmige oder faltige Abschnitte ausgebildet sind, die teilweise den Röhrenlängenbereich umgeben und benachbart angeordnete Wellen oder Falten aufweisen, die sich spiralförmig bei einer im wesentlichen gleichförmigen Steigung erstrecken.

7. Eine Metallröhre nach einem der Ansprüche 1 bis 6, dadurch gekennzeichnet, daß die dazwischen angeordneten und den Röhrenlängenbereich teilweise umgebenden wellenförmigen oder faltigen Abschnitte (3, 3', 3''; 4, 4', 4'') voneinander getrennte Prägungen umfassen, die zueinander bezüglich benachbart angeordneter Windungen winkelmäßig gedreht oder versetzt angeordnet sind.

8. Eine Metallröhre nach einem der Ansprüche 1 bis 7, dadurch gekennzeichnet, daß die Röhrenlängenbereich eine Anzahl von im wesentlichen gleichmäßig beabstandeter, dazwischen angeordneter und den Röhrenlängenbereich teilweise umfassender wellenförmiger oder faltiger Abschnitte (3, 3', 3''; 4, 4', 4'') aufweist, und daß die Abschnitte (3, 3', 3''; 4, 4', 4'') zueinander ähnlich oder verschieden angeordnet sind.

9. Eine Metallröhre nach einem der Ansprüche 1 bis 7, dadurch gekennzeichnet, daß die Röhrenlängenbereich eine Anzahl von ungleichmäßig beabstandeten, dazwischen angeordneten und den Röhrenlängenbereich teilweise umfassenden wellenförmigen oder faltigen Abschnitten (3, 3', 3''; 4, 4', 4'') aufweist, und daß die Abschnitte (3, 3', 3''; 4, 4', 4'') zueinander ähnlich oder verschieden angeordnet sind.

10. Eine Metallröhre nach einem der Ansprüche 1 bis 9, dadurch gekennzeichnet, daß die Röhre in dem Bereich der dazwischen angeordneten und die Röhre teilweise umgebenden wellenförmigen oder faltigen Abschnitte (3, 3', 3''; 4, 4', 4'') in eine im wesentlichen kreisförmige Konfiguration mit zueinander benachbart angeordneten Windungen angeordnet ist.

## Revendications

1. Une canalisation métallique continue comprenant sur sa longueur des tronçons à surface sensiblement lisse (1, 1', 2, 2') séparés les uns des autres par des parties (3, 3', 3''; 4, 4', 4'') formées localement dans la paroi de la canalisation, ondulées ou plissées et qui entourent seulement partiellement la périphérie de la canalisation, caractérisée en ce que lesdites parties ondulées ou plissées (3, 3', 3''; 4, 4', 4'') sont formées de fraisages ou estampages adjacents ayant un diamètre externe sensiblement correspondant au diamètre externe des tronçons intermédiaires (1, 1', 2, 2') de la canalisation métallique, la profondeur d'un fraisage ou d'un estampage étant maintenue sensiblement constante sur toute la longueur des parties ondulées ou plissées en relation avec les tronçons intermédiaires (1, 1', 2, 2') ayant une surface sensiblement lisse.

2. Une canalisation métallique selon la revendication 1 caractérisée en ce que les tronçons intermédiaires et les parties comportant des ondulations ou des plis sont disposées séparément en deux parties par deux surfaces intermédiaires sensiblement lisses s'étendant dans la direction longitudinale de la longueur de la canalisation, de préférence disposées en opposition l'une à l'autre.

3. Une canalisation métallique selon la revendication 1 caractérisée en ce que les tronçons intermédiaires et les parties ondulées ou plissées (3, 3', 3''; 4, 4', 4'') sont disposées séparément en au moins trois parties au moyen de surfaces intermédiaires sensiblement lisses s'étendant dans la direction longitudinale de la longueur de la canalisation.

4. Une canalisation métallique selon l'une des revendications 1 à 3 caractérisée en ce que les tronçons intermédiaires et les parties ondulées ou plissées (3, 3', 3''; 4, 4', 4'') sont disposées de manière à avoir des ondulations ou des plis adjacents avec des extensions annulaires individuelles différentes.

5. Une canalisation métallique selon l'une des revendications 1 à 3 caractérisée en ce que les tronçons intermédiaires et les parties ondulées ou plissées (3, 3', 3''; 4, 4', 4'') présentent des ondulations ou des plis s'étendant hélicoïdalement.

6. Une canalisation métallique selon l'une des revendications 1 à 3 caractérisée en ce que les tronçons intermédiaires et les parties ondulées ou plissées (3, 3', 3''; 4, 4', 4'') comprennent au moins deux parties ondulées ou plissées, entourant partiellement la longueur de la canalisation, et ayant des ondulations ou des plis s'étendant hélicoïdalement avec un pas sensiblement égal.

7. Une canalisation métallique selon l'une des revendications 1 à 6 caractérisée en ce que les tronçons intermédiaires et les parties ondulées ou plissées (3, 3', 3''; 4, 4', 4'') comprennent des bossages séparés l'un de l'autre, angulairement ou espacés en direction l'un de l'autre par rapport aux spires adjacentes.

8. Une canalisation métallique selon l'une des revendications 1 à 7 caractérisée en ce que la longueur de la canalisation comprend plusieurs parties ondulées ou plissées également espacées, entourant partiellement la longueur de la canalisation et en ce que lesdites parties (3, 3', 3''; 4, 4', 4'') sont arrangées de manière similaire ou non, l'une par rapport à l'autre.

9. Une canalisation métallique selon l'une des revendications 1 à 7 caractérisée en ce que la longueur de la canalisation comprend plusieurs parties ondulées ou plissées (3, 3', 3''; 4, 4', 4'') irrégulièrement espacées et en ce que lesdites parties (3, 3', 3''; 4, 4', 4'') sont arrangées de manière similaire, ou non similaire, l'une par rapport à l'autre.

10. Une canalisation métallique selon l'une des revendications 1 à 9 caractérisée en ce que la canalisation est coudée dans la région des parties ondulées ou plissées dans une configuration sensiblement circulaire présentant des spires adjacentes.

Fig. 1

Fig. 2

1

Fig. 3

Fig. 4

Fig. 5

Fig. 6

EP 0 193 524 B1